# EUROPEAN PATENT SPECIFICATION

(11) **EP 0 305 341 B1**
(45) Date of publication and mention of the grant of the patent: **19.01.1994**
(21) Application number: 88830326.0
(22) Date of filing: 26.07.1988
(51) Int. Cl.: B23D 21/00

(54) **Perfected version of pipe cutting machine using three blades positioned on the same plane**
Rohrschneidvorrichtung mit drei Messern, die auf der gleichen Fläche angebracht sind
Dispositif de coupe pour tubes, ayant trois couteaux déplaçables dans un plan

(30) Priority: 31.07.1987 IT 63687
(43) Date of publication of application: 01.03.1989
(73) Proprietor: Amadio, Filippo, I-63040 Folignano (AP) (IT)
(72) Inventor: Amadio, Filippo, I-63040 Folignano (AP) (IT)
(74) Representative: Baldi, Claudio

(56) References cited:
- EP-A- 0 220 138
- DE-A- 2 244 347
- FR-A- 1 263 376
- GB-A- 0 610 580
- US-A- 2 250 931
- US-A- 2 741 309

## Description

On 25/09/1985 the same applicant filed a patent application for an industrial invention no. IT 626 A/85, the object of which was a pipe cutting machine with two blades positioned on the same plane, operating at right-angles to one another and activated in rapid sequence. IT 626 A/85 has been claimed as priority in EP-A-0220138. The invention, object of the abovementioned industrial patent, which is considered to be the nearest prior art and the base of the first part of claim 1, had been conceived with the aim of improving the quality of the product obtained to date using traditional systems, such as disk or belt saws, which had proved to possess a number of drawbacks including the poor finish on the edge of the cut section, the deafening noise produced during the cutting operation and, above all, the length of time required for the operation which was obviously proportional to the thickness and diameter of the pipe and the length of the cut to be effected, according to the angle of inclination of the pipe in relation to the cutting plane.

To overcome these kinds of drawbacks, characteristic of the disk or belt saws, technicians in the field had already designed and manufactured fairly quiet and efficient pipe cutting machines that used a blade capable of cutting a pipe clamped in a vice provided for the purpose in a single stroke.

The cut made by machines of this type, however, could not be considered satisfactory if the cut section had to constitute the end portion of a pipe on which no additional finishing or cleaning was to be carried out.

In fact, one of the edges cut by the only blade on the abovementioned machines was torn and jagged to the extent that it actually made that particular piece of piping unfit for use. The other edge, while not revealing excessive deformation,was not however, sufficiently well finished to be able to constitute a completed end portion of a pipe.

The pipe cutting machine, object of the abovementioned patent EP-A-0220138 was created in order to remedy the drawbacks of the pre-existing pipe cutting machines and is characterised by the features of claim 1.

The first blade operates at a tangent to the pipe, its task being to make a shallow incision on its lateral surface, so as to create a small transversal slot that acts as a guide for the actual cut made subsequently by the second blade which, as it advances, inserts precisely into said slot and opens it further until the tube has been cut transversally, said cut terminating at a point diametrically opposed to the aforesaid guiding slot.

During testing this machine with two blades at right-angles proved to present a problem that could not be overlooked in that coils of swarf formed during cutting by the second blade and were pushed inside the pipe where part of them remained crushed on the inner edges of the cut section, thus necessitating cleaning and finishing operations.

The German patent DE-A-2244347 describes a pipe cutting machine with three cutting blades; two of the blades mounted on the came vertically sliding trolley, chit the pipe tangentially, from opposite sides, while the third blade, whose tip moves perpendicular to the axis of the pipe, cuts the pipe horizontally.
Said three-blade machine has exactly the same problems described above since the addition of a third blade, operating parallel and in synchrony with the first blade, in no way resolves the problem of swarf produced by the second blade, that is, the blade that completes the pipe cut from the initial slot made by the first blade. and closer to the axis of the pipe, the radial component of the force of impact between blade and pipe grows progressively until the pipe starts to be crushed to an ever increasing extent, thus damaging the finished product.

In other words, in order to obtain two satisfactory cuts with the two blades, contrasting conditions are required: the second blade, in fact, will not cause swarf formation inside the pipe only if the first blade makes a long and deep guiding slot in the pipe; the first blade, however, in order not to crush the pipe, has to act at a tangent thereto, and can thus create only a small transversal slot on the surface.

Bearing in mind these two contradictory requirements that do not allow for a valid common solution, the inventive idea behind the previously patented prototype machine has been further developed, leading to the introduction of a new, perfected pipe cutting machine characterised by the fact that it uses three blades operating on the same plane in rapid sequence, two of which act at a tangent to the pipe and cut a large transversal guiding slot on the surface thereof, starting from which the two symmetrical cutting edges of the third blade carry out the final cut that passes completely through said pipe.

Basically, the perfected machine, object of this patent application differs from the previous version due to the presence of a second blade that acts at a tangent to the pipe so as to lengthen the transversal slot made by the first blade in such a way that the formation of a coil of swarf during the final cut occurs towards the outside of the pipe, the cut section of which therefore remains perfectly clean and smooth.

For greater clarity of explanation, the description of the invention continues with reference to the enclosed drawings, included for illustrative and not limitative purposes, wherein:

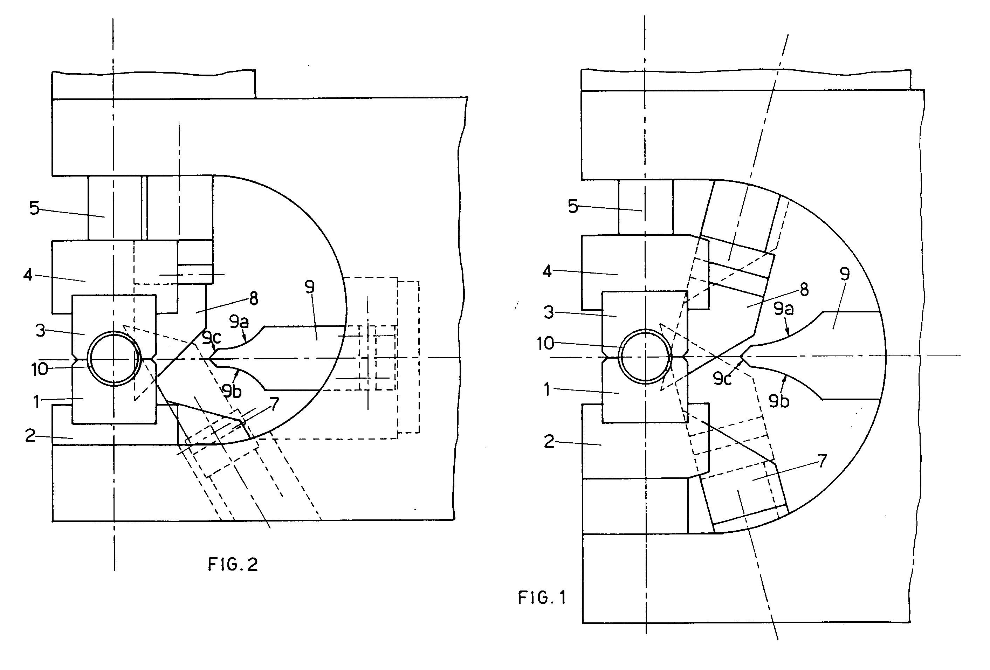

figs. 1 and 2 are schematic illustrations of two versions, constructed differently, but having the same function, of the pipe cutting

It is easy to understand that in order to avoid coils of swarf forming and remaining crushed inside the pipe it is sufficient to make a guiding slot of considerable transversal length, at least to the extent of creating an angle of incidence with the second cutting edge that is sufficient to push the coils of swarf,that progressively form as the second blade penetrates the pipe,towards the outside of the latter.

It is clear that in order to increase the length of the guiding slot in question, the first blade must no longer act at a tangent to the pipe but must operate closer to its axis in order to be able to make a deep transversal cut on said pipe.

As the cutting edge of the first blade moves away from a tangent machine according to the invention, seen from the side, in a direction parallel to the longitudinal axis of the pipe.

With reference to the abovementioned drawings, the pipe cutting machine according to the invention comprises four fundamental elements; the vice assembly, first blade assembly, second blade assembly and third blade assembly.

The vice assembly, the junction of which is to hold the pipe firm, is composed of a fixed jaw (1) set on the lower mounting (2) of the machine frame and a mobile jaw (3) set with its respective jaw mounting (4) on the hydraulic piston road (5) that serves to activate the opening and closing mechanism of the jaws.

The first blade assembly is composed of a blade (7) that is activated immediately, subsequent to the clamping of the pipe in the vice.

The function of this first blade (7) is to cut through the pipe at a tangent so as to create a short transversal slot that will then be lengthened by the second blade (8) that also acts at a tangent to the pipe but at a slightly different inclination with respect to blade (7) so as to increase the extension of the slot made by the first blade (7) around the circumference of the pipe.

It should be noted that when the second blade (8) acts it inserts itself into the slot made in the pipe by the first blade (7) and lengthens said slot at the end nearest the first blade, where the impact between the external surface of the pipe and the first blade (7) took place, giving rise to the formation of a small coil of swarf inside the pipe; this coil, however, is removed by the second blade (8) that opens the slot already formed exactly at the point at which said swarf is situated.

After the operations carried out by blades (7 and 8) therefore, the pipe bears a long transversal slot with coils of swarf situated on the outside of the pipe, at the two ends of said transversal slot.

The third blade (9), activated by its respective hydraulic piston completes the cutting of the pipe (10) by penetrating into the transversal slot previously made by blades (7 and 8), diametrically passing through the pipe (10) on the internal surface of which there is a progressive formation of coils of swarf which, when the cut is finished, automatically come away from the cut section, therefore leaving it perfectly smooth and clean.

The version illustrated in fig. 2, although the concept is identical to the one in fig.1, differs from the latter in that there is a difference in cutting depth between the first and second blades.

To be more precise, in the version in fig.1 the first and second blades (7 and 8) act at tangents to the pipe (10), said tangents being equidistant from the axis of the actual pipe, while in the version in fig. 2, the first blade (7) acts at a tangent which, in comparison with that of the second blade (8), is further from the axis of the pipe.

This second form of embodiment of the invention, characterised by the different depths of the transversal slot cut by the first and second blades is reccommended for cutting pipes of considerable thickness, where it is preferable for the first blade to just cut exactly through the pipe, but without actually making even the tiniest transversal slot which is made instead by the second blade (8) which, operating on a reduced thickness, encounters less resistance and can reach a greater depth, cutting with a single stroke a transversal slot that is sufficiently long to enable the third blade (9) to effect a perfect cut right through the pipe.

Finally, the shape of the two symmetrical cutting edges (9a and 9b) of blade (9) should be noted. Said blade (9) has a triangular tip (9c) from which two symmetrical curvilinear cutting edges (9a and 9b) branch off, with an outward facing concave profile; thus, starting from the edges that join up with the tip (9c), the distance between two symmetrically corresponding points on the two cutting edges continually increases.

## Claims

1. A pipe cutting machine using at least two blades on the same plane involving a vice assembly made up of a hydraulic piston (5) upon the rod of which is set a mobile jaw working in conjunction with a fixed jaw which is positioned opposite and set on the lower mounting (2) of the machine frame with a first blade (7) cutting the pipe (10) at a tangent so as to create a short transverse slot and second blade (9) which passes diametrically through the pipe (10);
characterized by a third blade (8) wich lengthens the slot made by the first blade (7), this third blade intervening after the first blade (7) and before the second blade (9), at a tangent with respect to pipe (10) but at a slightly different angle with respect to the first blade (7).

## Patentansprüche

1. Rohr-Abschneidemaschine mit mindestens zwei koplanaren Messern ausgestattet, versehen mit einem Schraubstock bestehend aus einem Hydraulik-Kolben (5) auf dessen Kolbenstange eine bewegliche Spannbacke befestigt ist, welche im Zusammenspiel mit einer zweiten, auf dem unteren Gestell (2) des Maschinenrahmens angebrachten, festen Spannbacke funktioniert, mit einem ersten Messer (7), welches das Rohr (10) tangential einschneidet, so daß ein kurzer Querschlitz entsteht, und einem zweiten Messer (9), welches das Rohr (10) schräg durchschneidet, gekennzeichnet durch ein drittes Messer (8), zur Verlängerung des vom ersten Messer (7) ausgeführten Schlitzes, wobei dieses dritte Messer nach dem ersten Messer (7), aber vor dem zweiten Messer (9) in Aktion tritt und die Schnittrichtung tangential zum Rohr (10), aber etwas schräg bezogen auf die Schnittrichtung des ersten Messers (7) verläuft.

## Revendications

1. Machine à couper les tuyaux qui utilise au moins deux couteaux coplanaires, du type comprenant un groupe étau composé d'un piston hydraulique (5) sur la tige duquel est fixée une mâchoire mobile qui coopère avec une autre mâchoire fixe et opposée positionnée sur le support inférieur (2) du châssis-machine avec un premier couteau (7) qui coupe de manière tangentielle le tuyau (10) de façon à réaliser une courte fente transversale et un deuxième couteau (9) qui traverse diamétralement le tuyau (10), caractérisée par un troisième couteau (8) qui allonge la fente effectuée par le premier couteau (7), ce troisième couteau intervenant après le premier couteau (7) et avant le deuxième couteau (9), selon une direction tangente au tuyau (10) mais légèrement inclinée par rapport à celle du premier couteau (7).
